## Europäisches Patentamt

## European Patent Office

## Office européen des brevets

(19)

(11) Veröffentlichungsnummer: **0 252 899**
**B1**

(12)
# EUROPÄISCHE PATENTSCHRIFT

(45) Veröffentlichungstag der Patentschrift:
**17.01.90**

(51) Int. Cl.⁴: **H02K 19/14**

(21) Anmeldenummer: **87890132.1**

(22) Anmeldetag: **12.06.87**

(54) **Bürstenloser Synchronmotor.**

(30) Priorität: **10.07.86 AT 1867/86**

(43) Veröffentlichungstag der Anmeldung:
**13.01.88 Patentblatt 88/2**

(45) Bekanntmachung des Hinweises auf die Patenterteilung:
**17.01.90 Patentblatt 90/3**

(84) Benannte Vertragsstaaten:
**BE CH DE FR GB IT LI NL SE**

(56) Entgegenhaltungen:
**DE-A- 2 815 597**
**DE-C- 259 760**
**DE-C- 650 894**
**DE-C- 883 174**
**US-A- 2 154 289**
**US-A- 4 023 091**

(73) Patentinhaber: **Dipl.Ing. Hitzinger Gesellschaft m.b.H.,**
**Helmholzstrasse 56, A-4021 Linz(AT)**

(72) Erfinder: **Platzer, Hubert, Keplerstrasse 21,**
**A-4020 Linz(AT)**
Erfinder: **Roland, Helmut, Hirtstrasse 1, A-4020 Linz(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Helner Hübscher**
**Spittelwiese 7, A-4020 Linz(AT)**

## Beschreibung

Die Erfindung bezieht sich auf einen bürstenlosen Synchronmotor mit einer kurzgeschlossenen Schutzwicklung für die Feldwicklung des Polrades.

Um die beim Anlaufen eines Synchronmotors aus dem Stillstand in der Feldwicklung des Polrades induzierten Spannungen begrenzen und die für die Speisung der Feldwicklung erforderlichen Schalteinrichtungen, insbesondere die Gleichrichter und die Thyristoren, vor unzulässigen Überspannungen während des asynchronen Anlaufes zu schützen, wird üblicherweise ein Ohmscher Schutzwiderstand parallel zur Feldwicklung geschaltet. Durch den Abschluß der Feldwicklung des Polrades mit einem Schutzwiderstand in der Größenordnung des fünf- bis zehnfachen Polradwiderstandes wird nicht nur die in der Feldwicklung induzierte Spannung auf einen zulässigen Wert begrenzt, sondern auch der Restschlupf beim Übergang vom asynchronen Anlauf zum synchronen Betrieb verkleinert. Außerdem läßt sich das Pendelmoment in der Nähe der synchronen Drehzahl stark herabsetzen, so daß die Anlaufbedingungen insgesamt verbessert werden. Ein Nachteil solcher Schutzwiderstände ist allerdings, daß die Widerstände im Polrad untergebracht werden müssen, was einen erheblichen Befestigungsaufwand zufolge der Fliehkraftbeanspruchung mit sich bringt. Dazu kommt noch, daß an den Ohmschen Schutzwiderständen auch während des Normalbetriebes Stromwärmeverluste auftreten, weil ja die Schutzwiderstände stets parallel zur Feldwicklung des Polrades liegen.

Zur Vermeidung dieser Nachteile ist eine Schaltung bekanntgeworden, bei der an Stelle eines Ohmschen Schutzwiderstandes eine kurzgeschlossene Schutzwicklung eingesetzt wird, die aufgrund der während des asynchronen Anlaufes in ihr induzierten Ströme die im Bereich der Feldwicklung auftretenden Wechselfelder dämpft. Da beim synchronen Lauf das umlaufende Drehfeld gegenüber dem Polrad und damit gegenüber der Schutzwicklung stillsteht, können während des Normalbetriebes keine den Wirkungsgrad des Motors nachteilig beeinflussende Verluste auftreten. Ein Vorteil ist auch darin zu sehen, daß eine stabile Konstruktion erhalten wird, weil keine zusätzlichen, mechanischen Abstützungen erforderlich werden. Mit einer kurzgeschlossenen Schutzwicklung dieser Art lassen sich jedoch die asynchronen Momente und die Pendelmomente lediglich durch die Verkettung der Schutzwicklung mit dem Ständerfeld beeinflussen, was die Abstimmung des Synchronmotors auf bestimmte Anlaufverhältnisse beeinträchtigt.

Der Erfindung liegt somit die Aufgabe zugrunde, diesen Mangel zu vermeiden und einen bürstenlosen Synchronmotor der eingangs geschilderten Art mit einfachen Mitteln so zu verbessern, daß die beim Einsatz eines Schutzwiderstandes auftretenden Vorteile für den asynchronen Anlauf auch bei einer kurzgeschlossenen Schutzwicklung ausgenützt werden können.

Die Erfindung löst die gestellte Aufgabe dadurch, daß die kurzgeschlossene Schutzwicklung aus zwei unterschiedliche Windungszahlen aufweisenden Wicklungsabschnitten besteht, die entweder mit entgegengesetztem Wicklungssinn ausgeführt oder gleichsinnig gewickelt, aber in einer Gegenschaltung angeordnet sind.

Durch die beiden Wicklungsabschnitte der Schutzwicklung, die entweder bei gleichem Wicklungssinn in einer Gegenschaltung angeordnet oder gegensinnig gewickelt sind, können einander entgegengesetzte elektrische Wirkungen erzielt werden, die sich innerhalb der kurzgeschlossenen Schutzwicklung zum Teil aufheben, so daß durch die frei wählbare Abstimmung der Windungszahlen der beiden Wicklungsabschnitte aufeinander im Zusammenhang mit dem gegebenen Ohmschen Widerstand der Schutzwicklung nicht nur die Spannungsbegrenzung, sondern auch eine Optimierung hinsichtlich des asynchronen Drehomentes und des auftretenden Pendelmomentes unter den vorgegebenen Verhältnissen erreicht werden kann, und zwar auch bei einer Verkettung dieser Schutzwicklung mit dem vollen Hauptfeld.

Besonders einfache Konstruktionsbedingungen können dadurch sichergestellt werden, daß die kurzgeschlossene Schutzwicklung zum Teil bifilar gewickelt ist.

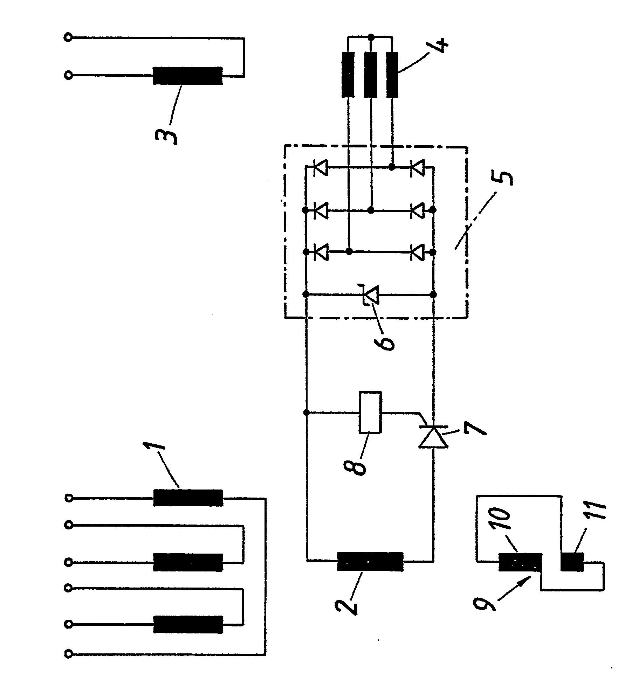

In der Zeichnung ist der Erfindungsgegenstand beispielsweise dargestellt, und zwar wird ein bürstenloser Synchronmotor nach der Erfindung in einem elektrischen Blockschaltbild schematisch gezeigt.

Der dargestellte Synchronmotor weist in üblicher Weise einen Ständer mit einer an ein Drehstromnetz angeschlossenen Drehstromwicklung 1 und ein Polrad mit einer Feldwicklung 2 auf, die von einer Erregermaschine gespeist wird, deren Ständerwicklung mit 3 und deren Läuferwicklung mit 4 bezeichnet sind. Der in der Läuferwicklung der Erregermaschine induzierte Wechselstrom wird in einem dem Polrad zugeordneten, rotierenden Gleichrichter 5, der durch einen Überspannungsableiter 6 geschützt wird, gleichgerichtet und erregt die Feldwicklung 2, wobei zur Steuerung ein Thyristor 7 mit einer Zündeinrichtung 8 vorgesehen ist.

Neu gegenüber herkömmlichen Synchronmotoren ist, daß das Polrad neben der Feldwicklung 2 eine kurzgeschlossene Schutzwicklung 9 aufweist, die aus zwei Wicklungsabschnitten 10 und 11 zusammengesetzt ist. Diese Wicklungsabschnitte 10 und 11 haben unterschiedliche Windungszahlen und sind gegensinnig gewickelt, so daß die in den Wicklungsabschnitten 10 und 11 während des Anlaufes des Synchronmotors aus dem Stillstand induzierten Spannungen einander zum Teil aufheben und einen Kurschlußstrom bedingen, der bei den auftretenden Wechselfeldern durch das Verhältnis der Windungszahlen der beiden Wicklungsabschnitte 10 und 11 bestimmt wird. Damit ist nicht nur eine Spannungsbegrenzung im Bereich der Feldwicklung möglich, sondern auch eine Beeinflussung des asynchronen Drehmomentes und des Pendelmomentes, so daß Anlaufbedingungen sichergestellt werden können, wie sie sonst nur durch einen Ohmschen Schutzwiderstand erreicht werden können.

Die Anordnung der Schutzwicklung 9 kann konstruktiv einfach durchgeführt werden, weil beispielsweise die Feldwicklung 2 auf die zum Teil bifilar auf den Polschenkeln des Polrades gewickelte Schutzwicklung 9 aufgebracht werden kann. Es sind aber auch andere Anordnungen der Schutzwicklung möglich. Wegen der gegensinning gewickelten Wicklungsabschnitte 10 und 11 spielt ja die volle Verkettung der Schutzwicklung 9 mit dem Hauptfeld keine Rolle und es braucht zur Abstimmung der Anlaufbedingungen nicht in den Streubereich ausgewichen zu werden, weil über das Verhältnis der Windungszahlen der beiden Wicklungsabschnitte 10 und 11 eine genaue Einflußnahme gegeben ist. An Stelle gegensinnig gewickelter Wicklungsabschnitte können selbstverständliche auch gleichsinnig gewickelte Wicklungsabschnitte treten, die in einer Gegenschaltung angeordnet sind.

## Patentansprüche

1. Bürstenloser Synchronmotor mit einer kurzgeschlossenen Schutzwicklung (9) für die Feldwicklung (2) des Polrades, dadurch gekennzeichnet, daß die kurzgeschlossene Schutzwicklung (9) aus zwei unterschiedliche Windungszahlen aufweisenden Wicklungsabschnitten (10, 11) besteht, die entweder mit entgegengesetzem Wicklungssinn ausgeführt oder gleichsinnig gewickelt, aber in einer Gegenschaltung angeordnet sind.

2. Synchronmotor nach Anspruch 1, dadurch gekennzeichnet, daß die kurzgeschlossen Schutzwicklung (9) zum Teil bifilar gewickelt ist.

## Claims

1. A brushless synchronous motor having a short-circuited protective winding (9) for the field winding (2) of the field spider, characterised in that the short-circuited protective winding (9) consists of two segments (10, 11) having different numbers of turns wound either in opposite directions or in the same directions but connected in opposition.

2. A synchronous motor according to claim 1, characterised in that the short-circuites protective winding (9) is partly a bifilar winding.

## Revendications

1. Moteur synchrone sans balais comprenant un enroulement protecteur (9) courtcircuité pour l'enroulement de champ (2) de la roue polaire, caractérisé en ce que l'enroulement protecteur (9) courtcircuité est formé par deux parties d'enroulement (10, 11) ayant des nombres de spires différents et qui sont enroulés soit dans le sens d'enroulement opposé ou dans le même sens, mais disposé dans un montage symétrique.

2. Moteur synchrone selon la revendication 1, caractérisé en ce que l'enroulement protecteur (9) courtcircuité est exécuté en partie comme enroulement bifilaire.